Europäisches Patentamt

European Patent Office

Office européen des brevets

(11) Veröffentlichungsnummer: **0 316 782**
**A1**

# EUROPÄISCHE PATENTANMELDUNG

(21) Anmeldenummer: 88118787.6

(22) Anmeldetag: 11.11.88

(51) Int. Cl.⁴: **C08G 65/46**

(30) Priorität: 17.11.87 DE 3738959

(43) Veröffentlichungstag der Anmeldung:
24.05.89 Patentblatt 89/21

(84) Benannte Vertragsstaaten:
BE DE FR GB IT NL

(71) Anmelder: **BASF Aktiengesellschaft**
**Carl-Bosch-Strasse 38**
**D-6700 Ludwigshafen(DE)**

(72) Erfinder: **Brandt, Hermann, Dr.**
**Keltenstrasse 30**
**D-6707 Schifferstadt(DE)**
Erfinder: **Gausepohl, Hermann, Dr.**
**Neuweg 10**
**D-6704 Mutterstadt(DE)**
Erfinder: **Dreher, Hermann, Dr.**
**Im Waldwinkel 5**
**D-6104 Seeheim-Jugenheim 1(DE)**
Erfinder: **Leber, Ludger, Dr.**
**Mainstrasse 4**
**D-6701 Dannstadt-Schauernheim(DE)**

(54) Verfahren zur Abtrennung der Metallkomponente des Katalysatorsystems aus Polyphenylenethern.

(57) Verfahren zur Abtrennung der Metallkomponente des Katalysatorsystems aus Reaktionsgemischen, die bei der oxidativen Kupplung von Phenolen zu Polyphenylenethern mit Hilfe von Katalysatorsystemen aus Metallverbindungen und Aminen in organischer Lösung, die gegebenenfalls mit einer wäßrigen Lösung eines Komplexierungsmittels für das Metall und/oder einer Säure behandelt worden ist, anfallen, wobei man die Metallkomponente durch Behandeln mit einem Metall in der Oxidationsstufe 0, das zu der Metallkomponente des Katalysatorsystems ein um mindestens 0,4 Volt höheres elektrochemisches Potential aufweist, reduziert zur Oxidationsstufe 0 und aus dem Reaktionsgemisch entfernt.

EP 0 316 782 A1

EP 0 316 782 A1

## Verfahren zur Abtrennung der Metallkomponente des Katalysatorsystems aus Polyphenylenethern

Die Erfindung betrifft ein Verfahren zur Abtrennung der Metallkomponente des Katalysatorsystems aus Reaktionsgemischen, die bei der oxidativen Kupplung von Phenolen zu Polyphenylenethern mit Hilfe von Katalysatorsystemen aus Metallverbindungen und Aminen in organischer Lösung, die gegebenenfalls mit einer wäßrigen Lösung eines Komplexierungsmittels für das Metall und/oder einer Säure behandelt worden ist, anfallen.

Die zur Herstellung der Polyphenylenether am häufigsten angewendeten Verfahren umfassen die Selbstkondensation einwertiger Phenole durch Einwirkung von Sauerstoff in Gegenwart von Katalysatorsystemen. Als Katalysatorsysteme werden üblicherweise Kupferamin- oder Manganaminkomplexe eingesetzt. Als Lösungsmittel werden vorzugsweise aromatische Kohlenwasserstoffe verwendet. Diese Verfahren sind allgemein bekannt und vielfach beschrieben, beispielsweise in den US-Patentschriften 3 306 874, 3 306 875, 3 639 656, 3 642 699 und 3 661 848.

Die Reaktion wird gewöhnlich durch Entfernen des Katalysators aus dem Reaktionsgemisch beendet. Dies kann gemäß der US-Patentschrift 3 630 995 mit Hilfe von wäßrigen Lösungen anorganischer Säuren oder Essigsäure geschehen. Dieses Verfahren wirkt jedoch häufig nur unvollständig, so daß durch zurückbleibende Katalysatorreste Qualitätsminderungen (z.B. Molekulargewichtsänderungen) möglich sind.

Es wurde daher vorgeschlagen, die Reaktionsmischung mit wäßrigen Lösungen von Komplexierungsmitteln wie Polyaminocarbonsäuren, Nitrilotriessigsäure oder Ethylendiamintetraessigsäure oder deren Natriumsalzen (DE-OS 2 364 319, DE-OS 2 616 746) oder Polyaminen (DE-OS 2 460 323) zu extrahieren. Auch die Kombination der Extraktion mit einer Fällung des Kupfers als Kupfer-I-oxid (DE-OS 2 752 835) oder ein mehrstufiges Extraktionsverfahren (DE-OS 3 324 323) sind bekannt. Diese Verfahren führen zwar im allgemeinen zu einer guten Überführung der Kupferkomponente des Katalysators in die wäßrige Phase, jedoch bereitet die nach der Extraktion notwendige Phasentrennung trotz vielfältiger Entwicklungsarbeiten häufig noch Schwierigkeiten, insbesondere bei hochkonzentrierten viskosen Polyphenylenetherlösungen.

Es ist auch bereits bekannt, die Kupferkomponente aus der Reaktionslösung mit Hilfe von Kationenaustauschern zu entfernen (vgl. US-PS 4 150 218). Das Adsorptionsvermögen an den Ionenaustauschern ist aber begrenzt, wegen der hohen Kosten muß regeneriert werden und es treten während des Prozesses Verdichtungen und Verklumpungen in der Ionenaustauschersäule auf, so daß das Verfahren für den kontinuierlichen Einsatz nicht geeignet ist.

Aus der DE-OS 3 442 141 war ein Verfahren bekannt, in dem die Kupferkomponente durch Reduktion mit Hydrazin und anschließendem Abfiltrieren des kupferhaltigen Niederschlags abgetrennt wird. Abgesehen davon, daß der Niederschlag häufig feinteilig anfällt und nur unter großem Aufwand abgetrennt werden kann, ist das beschriebene Verfahren nur anwendbar auf Polyphenylenetherlösungen in bestimmten Lösungsmittelgemischen, aus denen der Restsauerstoff in aufwendiger Weise mit Inertgasen verdrängt wurde. Darüber hinaus sind die mit diesem Verfahren herstellbaren Produkte noch nicht ausreichend hitzestabil, so daß die Gefahr besteht, daß das Molekulargewicht beim Verarbeiten verändert wird.

Aufgabe der vorliegenden Erfindung war es daher, ein breit anwendbares und gleichzeitig einfaches und sicher durchführbares Verfahren zur Abtrennung der Metallkomponente des Katalysatorsystems aus Polyphenylenetherlösungen bereitzustellen, in dem Produkte mit guten thermischen und mechanischen Eigenschaften, insbesondere hoher Hitzestabilität entstehen.

Demgemäß wurde ein Verfahren zur Abtrennung der Metallkomponente des Katalysatorsystems aus Reaktionsgemischen, die bei der oxidativen Kupplung von Phenolen zu Polyphenylenethern mit Hilfe von Katalysatorsystemen aus Metallverbindungen und Aminen in organischer Lösung, die gegebenenfalls mit einer wäßrigen Lösung eines Komplexierungsmittels für das Metall und/oder einer Säure behandelt worden ist, anfallen, das dadurch gekennzeichnet ist, daß man die Metallkomponente durch Behandeln mit einem Metall in der Oxidationsstufe 0, das zu der Metallkomponente des Katalysatorsystems ein um mindestens 0,4 Volt höheres elektrochemisches Potential aufweist, reduziert zur Oxidationsstufe 0 und aus dem Reaktionsgemisch entfernt, gefunden.

Außerdem wurden spezielle Ausführungsformen gemäß der Unteransprüche gefunden.

Erfindungswesentlich ist die Verwendung eines Metalls, das zu der Metallkomponente des Katalysatorsystems ein um mindestens 0,4 Volt höheres elektrochemisches Potential aufweist. Die Höhe des elektrochemischen Potentials gibt die Reduzierfähigkeit des Metalls an (vgl. A.F. Hollemann, E. Wiberg, Lehrbuch der anorganischen Chemie, Berlin 1964, S. 166 ff). Diese Metalle werden in der Oxidationsstufe 0, z.B. in metallischer Form, eingesetzt (A.F. Hollemann, E. Wiberg, loc.cit., S. 170ff). Sie werden ann, E. Wiberg, loc.cit., S. 170ff). Sie werden mit der Reaktionsmischung in Kontakt gebracht, so daß sie die Metallkompo-

2

nente zur Oxidationsstufe 0 reduzieren und selbst zu höheren Oxidationsstufen oxidiert werden.

Als Metalle in der Oxidationsstufe 0 werden bevorzugt Eisen, Aluminium oder Zinn, insbesondere Zink oder Magnesium verwendet. Gute Ergebnisse werden erzielt, wenn als Metallkomponente des Katalysatorsystems Kupfer verwendet wird.

Das Metall wird mit gutem Erfolg in metallischer Form eingesetzt. Daneben können einige Metalle, wie z.B. Eisen, auch in Form ihrer Carbonyle (A.F. Hollemann, E. Wieberg, loc. cit., S. 558ff) eingesetzt werden.

Es hat sich als günstig herausgestellt, wenn das Metall in feinteiliger Form mit dem Reaktionsgemisch in Kontakt gebracht wird. Bewährt haben sich Metallwolle, Fasern, Flitter, Drähte, Drahtgeflechte, Pulver oder Kugeln. Bevorzugt wird das Metall als Pulver eingesetzt. In technischen Anlagen werden gute Erfolge erzielt, wenn die Metallteilchen ein Gewichtsmittel der Teilchendurchmesser zwischen 0,1 und 2, bevorzugt 0,5 bis 1,5 mm aufweisen.

Die Art des Einbringens des Metalls in die Reaktionsmischung ist nicht kritisch, solange die vollständige Reduktion der Metallkomponente des Katalysatorsystems gewährleistet ist. Man kann diskontinuierlich arbeiten, z.B. in üblichen Mischvorrichtungen, wie Rührbehältern, oder kontinuierlich, indem man das Reaktionsgemisch über eine Aufschüttung des Metalls, z.B. in einem Rohr oder einer Säule, laufen läßt. Man arbeitet üblicherweise bei Temperaturen zwischen 15 und 110° C, bevorzugt 30 und 80° C, insbesondere 50 bis 75° C. Die Kontaktzeit beträgt üblicherweise 2 bis 300, bevorzugt 3 bis 100, insbesondere 3 bis 30 Minuten. Die erfindungsgemäße Behandlung kann ein- oder mehrstufig durchgeführt werden, wobei inerte Stoffe wie Glaskugeln ähnlicher Größe zugegen sein können.

Es besteht die Möglichkeit, das erfindungsgemäße Verfahren im Anschluß an schon bekannte Reinigungsverfahren mit wäßrigen Säuren bzw. Komplexiermitteln, wie es z.B. in der deutschen Patentanmeldung Nr. 36 32 528.7 beschrieben ist, einzusetzen. Die dabei anfallende wäßrige Phase muß vor der Durchführung des erfindungsgemäßen Verfahrens nicht abgetrennt werden. Eine solche Verfahrensweise wird bevorzugt.

Es ist selbstverständlich, daß man zur vollständigen Abtrennung der Metallkomponente des Katalysatorsystems mindestens äquivalente Mengen an Metall einsetzen muß. Bewährt haben sich Überschüsse an Metall, wie ein 5 bis 5000-facher, insbesondere 10 bis 1000-facher molarer Überschuß des Metalls in der Oxidationsstufe 0 über der Metallkomponente des Katalysatorsystems.

Bei der erfindungsgemäßen Verfahrensweise wird die Metallkomponente reduziert und fällt aus der Reaktionsmischung aus. Soweit der Niederschlag nicht von der Aufschüttung des Metalls zurückgehalten wird, wird er aus der Reaktionsmischung entfernt, was z.B. durch übliches Filtrieren, Dekantieren oder Zentrifugieren geschehen kann. Dieses kann ebenfalls kontinuierlich oder diskontinuierlich erfolgen, wobei sich Filtrierhilfsmittel wie Kieselgel, Aktivkohle oder Kieselgur bewährt haben.

Bei dem für die Herstellung des Polyphenylenethers verwendeten Katalysatorsystem handelt es sich üblicherweise um eine Kombination aus einem Amin, z.B. n-Dibutylamin, Diethylamin, N,N'-Di-tert-butylethylendiamin, Tri-n-butylamin, Morpholin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-bromid, Kupfer-I-chlorid, Kupfer-I-jodid, Kupfer-II-acetat, Kupfer-II-chlorid, Kupfer-II-propionat oder Kupfer-II-acetylacetonat. Ein bevorzugter Bereich der Menge der eingesetzten Amine liegt bei 2,0 bis 40 mol%, bezogen auf das Monomere; die Konzentration der Amine kann aber in der Reaktionsmischung innerhalb weiter Grenzen variieren, zweckmäßig sind jedoch niedere Konzentrationen. Die Konzentration der Kupfersalze wird in der Regel gering gehalten und beträgt vorzugsweise von 0,2 bis 2,5 mol%, bezogen auf das Monomere.

Bei den Monomeren handelt es sich üblicherweise um einwertige Phenole, die in den beiden ortho-Stellungen und gegebenenfalls den meta-Positionen, nicht aber in der para-Position Alkylsubstituenten aufweisen, wie z.B. 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird im allgemeinen ein sauerstoffhaltiges Gas in die 15 bis 50° C warme Lösung des Monomeren in Gegenwart des Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Als Lösungsmittel werden Benzol, Toluol oder aliphatische Kohlenwasserstoffe verwendet. Der Gewichtsanteil des Lösungsmittels liegt üblicherweise im Bereich von 1:1 bis 20:1, d.h. maximal bis zu einem 20fachen Überschuß des Lösungsmittels, bezogen auf das Monomere. Die Polykondensation ist in kurzer Zeit, im allgemeinen nach 3 Stunden, beendet.

Die in einem solchen Verfahren hergestellten Polyphenylenether weisen im allgemeinen Molekulargewichte zwischen 10.000 und 90.000, bestimmt nach der in "Macromolecular Synthesis" 1 (1978), Seite 83, angegebenen Methode, auf.

Wenn die Polykondensation die gewünschte Ausbeute und das Polymere das gewünschte Molekulargewicht erreicht haben, enthält die Reaktionslösung üblicherweise 1 bis 30 Gew.% Polyphenylenether, 0,005 bis 1,5 Gew.% Metallionen und etwa 1,0 bis 6,0 Gew.% Amin. Der Lösung können gegebenenfalls geringe Mengen anderer Materialien, z.B. reduzierende Substanzen wie Natriumsulfit, Natriumdisulfit, Natriumdithionit, Eisen-II-sulfat, Hydrazin, Hydroxylamin oder Zinn-II-chlorid und/oder Substanzen wie Chinone, ein- oder zweiwertige Phenole oder deren Ether, Aminophenole oder Phenylendiamin in Mengen von 1 bis 100 mol pro mol der Metallkomponente des Katalysators zur Stabilisierung gegen oxidative Verfärbung oder Molekulargewichtsveränderungen zugesetzt werden. Die Kupferkomponente des Katalysators wird bevorzugt diesen Reaktionslösungen mit dem erfindungsgemäßen Verfahren entzogen.

Danach und gegebenenfalls nach Waschen der Polyphenylenetherlösung mit Wasser bzw. ihrer Stabilisierung kann der Polyphenylenether aus der Lösung nach bekannten Verfahren isoliert werden. Die Isolierung des Polyphenylenethers ist für die vorliegende Erfindung nicht kritisch. So kann z.B. der Polyphenylenether durch Ausfällen aus der Reaktionslösung mittels eines Fällungsmittels wie Methanol oder durch Entfernung des Lösungsmittels, durch Einblasen von Wasserdampf oder durch Sprühtrocknung gewonnen werden.

Gegenüber den bekannten Verfahren zur Abtrennung der Metallkomponente des Katalysatorsystems liefert das erfindungsgemäße Verfahren in einfacher und sicherer Weise Polyphenylenether, die praktisch frei von der Metallkomponente des Katalysatorsystems sind und die in ausgewogener Weise gute thermische und mechanische Eigenschaften, gute Witterungsbeständigkeit und Hitzestabilität des Molekulargewichtes und der Molekulargewichtsverteilung miteinander vereinigen.

Beispiel 1

Herstellung von Poly-(2,6-dimethyl-1,4-phenylen)-ether:

Eine Vorlage von 1,3 g Cu-1-Bromid und 20 g 1,4-Dimethylpentylamin und 2 g 2,6-Dimethylphenol ( = DMP) wurde bei 20°C 5 Minuten unter Einleiten von Sauerstoff gerührt, dann wurde im Verlauf von 30 Minuten in eine Lösung von 204 g DMP in 1400 ml Toluol eindosiert. Anschließend wurde noch 1 Stunde bei 20°C gerührt. Die Reaktion wurde in Gegenwart von 30 Liter Sauerstoff pro Stunde durchgeführt. Die resultierende Polyphenylenetherlösung (PPE-Lösung) enthielt 450 ppm Kupfer.

Abtrennung:

In einem 1 Liter Vierhalskolben, versehen mit Kreuzbalkenrührer, Thermometer und Rückflußkühler wurden zu 500 ml der toluolischen PPE-Lösung 20 ml 40 %ige wäßrige NaHSO₃-Lösung und 40 ml 10 %ige wäßrige Essigsäure-Lösung gegeben.

Das Gemisch wurde unter intensiven Rühren (600 UPM) auf 70°C erhitzt. Nach Zugabe von 50 g Eisenpulver wurde die Suspension 30 Minuten bei 70°C gerührt, danach abgelassen, filtriert, nochmals mit 100 g Eisenpulver versetzt, 30 Minuten bei 70°C gerührt, filtriert und auf 25°C gebracht. Der Kupfergehalt nach der Behandlung mit Eisen betrug 3 ppm.

Beispiele 2 - 5

Es wurde wie in Beispiel 1 gearbeitet, anstelle des Eisens wurden die Metalle Zink, Aluminium, Magnesium und Zinn eingesetzt.

| Bsp. | Metall | Cu-Gehalt nach Abtrennung |
|------|--------|---------------------------|
| 2 | Zn | < 1 ppm |
| 3 | Al | < 1 ppm |
| 4 | Mg | 3 ppm |
| 5 | Sn | 2 ppm |

Die gemäß Beispiel 2 von Kupfer befreite Lösung wurde durch Zentrifugieren von der wäßrigen Phase getrennt und in einem Bombenrohr 30 Minuten auf 250°C erhitzt. Anschließend wies der Polyphenylenether nach GPC-Messung ein mittleres Molekulargewicht von 45 000 (Gewichtsmittelwert gemäß Polystyrolstandard) bei unimodaler Verteilung auf.

Beispiel 6

Apparatur: Kreislaufapparatur, bestehend aus
a) 10 l-Vorratsgefäß, versehen mit Heizung, $N_2$-Spülung, Thermometer und Rückflußkühler
b) Kreiselpumpe
c) Doppelmantelrohr mit einem Innenvolumen von 0,2 l, versehen mit Heizung und 2 Haarsieben am unteren und oberen Ende des Rohres
d) Auffangkessel

In das Vorratsgefäß wurden 8 Liter von toluolischen PPE-Lösungen, die ähnlich wie in Beispiel 1 hergestellt worden waren, und 0,3 Liter 40 %ige $NaHSO_3$-Lösung eingefüllt, auf 70°C erhitzt und mittels Pumpe über das mit einer Mischung aus 100 g Zink-Granulat (mittlerer Teilchendurchmesser ($d_{50}$) = 1 mm) und 100 g Glaskugeln gefüllte Doppelmantelrohr in den Auffangkessel gepumpt. Der Volumenstrom wurde zwischen 0,5 - 2,5 l/h variiert.

| Volumenstrom | Cu-Gehalt | |
| --- | --- | --- |
| | vor | nach |
| | Behandlung | |
| 0,5 l/h | 418 ppm | 4 ppm |
| 1,0 l/h | 380 ppm | 6 ppm |
| 2,5 l/h | 735 ppm | 2 ppm |

Vergleichsversuch 1*

Die in Beispiel 2 verwendete PPE-Lösung wurde entsprechend der DE-OS 3 442 141 durch Strippen mit $N_2$ von $O_2$ befreit, mit soviel Hydrazin versetzt, daß auf 1 mol Kupfer 9 mol Hydrazin kamen, auf 70°C erwärmt und der kupferhaltige Niederschlag abzentrifugiert. Die resultierende Lösung von Polyphenylenether wurde in einem Bombenrohr 30 Minuten auf 250°C erhitzt. Anschließend wies der Polyphenylenether nach GPC-Messung ein mittleres Molekulargewicht von 30.000 (Gewichtsmittelwert gemäß Polystyrolstandard) und eine bimodale Molekulargewichtsverteilung auf.

**Ansprüche**

1. Verfahren zur Abtrennung der Metallkomponente des Katalysatorsystems aus Reaktionsgemischen, die bei der oxidativen Kupplung von Phenolen zu Polyphenylenethern mit Hilfe von Katalysatorsystemen aus Metallverbindungen und Aminen in organischer Lösung, die gegebenenfalls mit einer wäßrigen Lösung eines Komplexierungsmittels für das Metall und/oder einer Säure behandelt worden ist, anfallen, dadurch gekennzeichnet, daß man die Metallkomponente durch Behandeln mit einem Metall in der Oxidationsstufe 0, das zu der Metallkomponente des Katalysatorsystems ein um mindestens 0,4 Volt höheres elektrochemisches Potential aufweist, reduziert zur Oxidationsstufe 0 und aus dem Reaktionsgemisch entfernt.

2. Verfahren nach Anspruch 1, dadurch gekennzeichnet, daß die Metallkomponente des Katalysatorsystems Kupfer ist.

3. Verfahren nach den Ansprüchen 1 bis 2, dadurch gekennzeichnet, daß das Metall in der Oxidationsstufe 0 Eisen, Aluminium oder Zinn ist.

4. Verfahren nach den Ansprüchen 1 bis 3, dadurch gekennzeichnet, daß das Metall in der Oxidationsstufe 0 Zink ist.

**EP 0 316 782 A1**

5. Verfahren nach den Ansprüchen 1 bis 4, dadurch gekennzeichnet, daß das Metall in der Oxidationsstufe 0 Magnesium ist.

6. Verfahren nach den Ansprüchen 1 bis 5, dadurch gekennzeichnet, daß man die organische Lösung durch eine Aufschüttung aus Teilchen des Metalls in der Oxidationsstufe 0 mit einem Durchmesser von 0,1 bis 2 mm leitet.

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 962 767 (GENERAL ELECTRIC) <br> * Ansprüche * <br> --- | 1-6 | C 08 G 65/46 |
| X | CHEMICAL ABSTRACTS, Band 75, Nr. 24, 13. Dezember 1971, Seite 14, Nr. 141367k, Columbus, Ohio, US; & JP-A-71 21 222 (SUMITOMO CHEMICAL CO., LTD) 15-06-1971 <br> * Zusammenfassung * <br> ----- | 1-6 | |

**RECHERCHIERTE SACHGEBIETE (Int. Cl.4)**

C 08 G

Der vorliegende Recherchenbericht wurde für alle Patentansprüche erstellt

| Recherchenort | Abschlußdatum der Recherche | Prüfer |
|---|---|---|
| DEN HAAG | 08-03-1989 | DERAEDT G. |